# FASCICULE DE BREVET EUROPEEN

(11) **EP 2 659 015 B1**
(45) Date de publication et mention de la délivrance du brevet: **30.08.2017**
(21) Numéro de dépôt: 11802749.9
(22) Date de dépôt: 23.12.2011
(51) Int. Cl.: C22C 43/00, B22F 1/00, C22B 60/02

(54) **POUDRE D'UN ALLIAGE À BASE D'URANIUM ET DE MOLYBDENE UTILE POUR LA FABRICATION DE COMBUSTIBLES NUCLEAIRES ET DE CIBLES DESTINÉES À LA PRODUCTION DE RADIO-ISOTOPES**
LEGIERUNGSPULVER AUF URAN- UND MOLYBDÄNBASIS ZUR HERSTELLUNG VON KERNBRENNSTOFF UND TARGETS ZUR HERSTELLUNG VON RADIOISOTOPEN
URANIUM- AND MOLYBDENUM-BASED ALLOY POWDER THAT CAN BE USED FOR THE PRODUCTION OF NUCLEAR FUEL AND TARGETS INTENDED FOR THE PRODUCTION OF RADIOISOTOPES

(30) Priorité: 28.12.2010 FR 1061319
(43) Date de publication de la demande: 06.11.2013
(73) Titulaire: Commissariat à l'Énergie Atomique et aux Énergies Alternatives, 75015 Paris (FR); Universite Rennes 1, 35065 Rennes Cedex (FR); Centre National de la Recherche Scientifique, 75016 Paris (FR)
(72) Inventeur: ALLENOU, Jérôme, F-22800 Le Vieux Bourg (FR); CHAROLLAIS, François, F-84530 Villelaure (FR); BROTHIER, Méryl, F-13090 Aix-en-Provence (FR); ILTIS, Xavière, F-04860 Pierrevert (FR); TOUGAIT, Olivier, F-35000 Rennes (FR); PASTUREL, Mathieu, F-35440 Montreuil sur Ille (FR); NOEL, Henri, F-35235 Thorigne Fouillard (FR)
(74) Mandataire: Ahner, Philippe
(86) Numéro de dépôt international: PCT/EP2011/073999
(87) Numéro de publication internationale: WO 2012/089684

(56) Documents cités:
- DE-A1- 1 433 120
- FR-A1- 2 777 688
- FR-A1- 2 889 351
- GB-A- 2 354 256
- US-A- 3 109 730
- LEE J-S ET AL: "Study of decomposition and reactions with aluminum matrix of dispersed atomized U-10 wt% Mo alloy", JOURNAL OF NUCLEAR MATERIALS, ELSEVIER BV, NL, vol. 306, no. 2-3, 1 décembre 2002 (2002-12-01), pages 147-152, XP004395096, ISSN: 0022-3115, DOI: 10.1016/S0022-3115(02)01309-0 cité dans la demande
- PARK J M ET AL: "Neutron diffraction analyses of U(610wt.%)Mo alloy powders fabricated by centrifugal atomization", JOURNAL OF NUCLEAR MATERIALS, ELSEVIER BV, NL, vol. 397, no. 1-3, 1 février 2010 (2010-02-01), pages 27-30, XP026883117, ISSN: 0022-3115, DOI: 10.1016/J.JNUCMAT.2009.11.026 [extrait le 2009-12-01] cité dans la demande

## Description

### DOMAINE TECHNIQUE

La présente invention se rapporte à une poudre d'un alliage à base d'uranium et de molybdène en phase γ métastable et, en particulier d'un alliage binaire UMo ou d'un alliage ternaire UMoX où X représente un métal autre que l'uranium et le molybdène.

Elle se rapporte également à un procédé permettant de préparer cette poudre d'alliage ainsi qu'aux utilisations de cette poudre.

Une telle poudre d'alliage est, en effet, propre à entrer dans la constitution de combustibles nucléaires et, notamment, de combustibles pour réacteurs nucléaires expérimentaux, plus connus sous le sigle MTR (de « **M**aterial **T**esting **R**eactor »), tels que le Réacteur Jules Horowitz (RJH) du CEA Cadarache, le Réacteur à Haut Flux (RHF) de l'Institut Laue-Langevin ou encore le réacteur à haut flux neutronique BR-2 du site de Mol en Belgique.

Elle est également susceptible d'entrer dans la constitution de cibles pour la production de radioisotopes, notamment pour l'industrie médicale.

### ÉTAT DE LA TECHNIQUE ANTÉRIEURE

Jusque dans les années 1950, les combustibles dédiés aux MTR étaient essentiellement constitués d'alliages d'uranium et d'aluminium présentant une teneur massique en uranium 235 de 93% pour une charge spécifique de 1,2 g d'uranium par cm³.

A partir de 1977 et sous l'impulsion des Etats-Unis d'Amérique, un programme visant à réduire les risques de prolifération des armes nucléaires et, donc, à abaisser le taux d'enrichissement en uranium des combustibles dédiés aux MTR a été mis en place au niveau international. Il s'agit du programme RERTR (de « **R**educed **E**nrichment for **R**esearch and **T**est **R**eactor »).

Dès lors, la mise au point de nouveaux alliages d'uranium qui soient capables de servir de combustibles nucléaires dans des MTR tout en présentant une teneur massique en uranium 235 ne dépassant pas 20%, a donné lieu à de nombreuses études.

Ont ainsi été notamment étudiés les alliages à base d'uranium et de silicium et les alliages à base d'uranium et de molybdène. Ce dernier type d'alliage est celui qui présente les propriétés les plus intéressantes puisqu'il permet notamment d'atteindre une charge spécifique de 8,5 g d'uranium par cm³ d'âme combustible alors que cette charge n'est au mieux que de 4,8 g d'uranium par cm³ pour les siliciures d'uranium.

A ce jour, trois types de poudres d'alliages d'uranium et de molybdène en phase γ métastable ont été proposés, à savoir : des poudres obtenues par « *fusion-atomisation* », des poudres obtenues par « *fusion-fragmentation mécanique »* et des poudres obtenues par « *fusion-fragmentation chimique ».*

Les poudres obtenues par « *fusion-atomisation* », dont la préparation est notamment décrite dans le brevet français n° 2 777 688 **[1],** le brevet américain n° 5,978,432 **[2],** la demande de brevet japonais n° 55-054508 **[3])** et la demande de brevet britannique n° 2 354 256 **[7],** sont composées de particules qui sont, d'une part, sphériques ou quasi sphériques (c'est-à-dire que le rapport entre leur dimension maximale (Dₘₐₓ) et leur dimension minimale (Dₘᵢₙ) est inférieur à 1,1) et, d'autre part, dénuées de porosité intraparticulaire (sauf défaut de fabrication).

Or, il n'est pas souhaitable que les particules d'une poudre d'un alliage d'uranium et de molybdène, qui est destinée à entrer dans la constitution de combustibles nucléaires, soient sphériques ou quasi sphériques car cela peut induire une ségrégation de particules fissiles au cours du laminage auquel sont soumis les éléments combustibles lors de leur fabrication, tout comme il n'est pas souhaitable que ces particules soient dénuées de porosité, une telle porosité étant, en effet, nécessaire pour assurer la présence dans les combustibles de réservoirs tampons pour les gaz de fission, propres à augmenter la capacité de ces combustibles à retenir ces gaz en situation d'irradiation et, partant, à retarder l'apparition d'un gonflement desdits combustibles.

Au surplus, les particules de ces poudres sont composées de grains dont la teneur en molybdène diffère du centre à la périphérie de ces grains (J.S. Lee et al., Journal of Nuclear Materials, 306, 147-152, 2002 **[4]**), et sont recouvertes d'une mince couche d'oxyde dont l'adhérence est faible. (J.M. Park et al., Journal of Nuclear Materials, 397, 27-30, 2010 **[5]**).

Les poudres obtenues par « *fusion-fragmentation mécanique* » sont composées de particules dont la forme et les dimensions sont non définies et non maitrisées et qui sont, comme les particules des poudres précédentes, dénuées de porosité intraparticulaire (sauf, là encore, défaut de fabrication). Ces particules présentent de plus une microstructure granulaire à fort taux d'écrouissage. Or, une telle microstructure est *a priori* instable et susceptible d'évoluer fortement en situation d'irradiation.

Quant aux poudres obtenues par « *fusion-fragmentation chimique* », elles sont également composées de particules dont la forme et les dimensions sont non définies et non maitrisées et qui sont également dénués de toute porosité intragranulaire. De plus, ces poudres ne peuvent être que des poudres d'alliages binaires UMo, c'est-à-dire strictement composés d'uranium et de molybdène, car les procédés par « *fusion-fragmentation chimique* » ne permettent pas d'obtenir des poudres d'alliages ternaires UMoX dans lesquels l'élément X est réparti de manière homogène.

Compte tenu de ce qui précède, les Inventeurs se sont donc fixé pour but de fournir une poudre d'un alliage à base d'uranium et de molybdène en phase γ métastable qui, d'une manière générale, soit exempte de tous les inconvénients présentées par les poudres d'alliages à base d'uranium et de molybdène proposées à ce jour.

Plus particulièrement, les Inventeurs se sont fixé pour but de fournir une poudre d'un alliage à base d'uranium et de molybdène en phase γ métastable dont les particules présentent des caractéristiques, notamment de forme, de porosité intragranulaire et d'homogénéité de répartition du molybdène, propres à faciliter la fabrication de combustibles nucléaires à partir de cette poudre et à optimiser le comportement de ces combustibles en situation d'irradiation et, en particulier, leur capacité à retenir les gaz de fission.

Ils se sont également fixé pour but que cette poudre d'alliage puisse aussi bien être une poudre d'un alliage ternaire UMoX, voire d'un alliage composé d'un nombre de métaux supérieur à 3, qu'une poudre d'un alliage binaire UMo.

Ils se sont en outre fixé pour but que cette poudre d'alliage puisse être fabriquée par un procédé qui soit relativement simple à mettre en oeuvre et ait un coût compatible avec une exploitation à une échelle industrielle.

### EXPOSÉ DE L'INVENTION

Ces buts et d'autres encore sont atteints par la présente invention qui propose, en premier lieu, une poudre d'un alliage comprenant de l'uranium et du molybdène en phase γ métastable, laquelle poudre est formée de particules qui présentent un indice d'élongation au moins égal à 1,1, une valeur de porosité fermée non nulle et qui sont composées de grains ayant une teneur en molybdène dont les variations au sein d'un même grain sont au plus de 1% massique.

Dans ce qui précède et ce qui suit, on entend par « *indice d'élongation* » d'une particule, aussi appelé paramètre d'élongation, le rapport du diamètre de Féret maximal au diamètre de Féret minimal de cette particule.

A cet égard, on rappelle que le diamètre de Féret maximal, noté D_{Fmax}, d'une particule correspond à la distance existant entre deux tangentes parallèles à des côtés opposés de cette particule tandis que le diamètre de Féret minimal, noté D_{Fmin}, d'une particule correspond donc à la distance minimale existant entre deux tangentes parallèles à des côtés opposés de cette particule.

Les diamètres de Féret maximal et minimal et, donc, l'indice d'élongation des particules de la poudre d'alliage selon l'invention peuvent notamment être déterminés à partir d'images de microscopie électronique ou optique en suivant la méthodologie décrite par C. Souchier dans « Analyse d'images », in Techniques de l'Ingénieur, Traité Analyse Chimique et Caractérisation, P855, 1-18, 1998 **[6].**

Par ailleurs, on entend par « *porosité fermée »* d'une particule, aussi appelée porosité occluse, l'ensemble des pores que comporte cette particule et qui sont occlus dans l'alliage constituant la particule, c'est-à-dire qui ne débouchent pas à la surface de la particule.

La valeur de la porosité fermée des particules de la poudre d'alliage selon l'invention peut notamment être déterminée à partir d'images obtenues en microscopie électronique à balayage, en coupes polies, conformément à la norme ASTM E1245-03.

Quant aux variations de la teneur en molybdène (ou de tout autre élément métallique) au sein d'un grain, elles peuvent notamment être déterminées en soumettant ce grain à une analyse par microscopie électronique à balayage couplée à une analyse par spectrométrie à dispersion d'énergie.

Conformément à l'invention, l'indice d'élongation des particules de la poudre d'alliage est, de préférence, au plus égal à 2, les Inventeurs ayant, en effet constaté, qu'un indice d'élongation compris entre 1,1 et 2 permet de conférer à des combustibles, qui sont fabriqués sous forme de plaques à partir de cette poudre d'alliage, une porosité interparticulaire importante, de l'ordre de 3 à 10% (v/v) et ce, sans affecter pour autant le comportement au laminage de la poudre d'alliage.

Or, une telle porosité interparticulaire est extrêmement intéressante puisqu'elle va, comme la porosité intraparticulaire (c'est-à-dire la porosité fermée des particules), assurer le rôle de réservoirs tampons pour les gaz de fission en situation d'irradiation et augmenter ainsi la capacité de rétention des gaz de fission des combustibles.

Conformément à l'invention, la valeur de la porosité fermée des particules de la poudre d'alliage est préférentiellement au plus égale à 5% (v/v) et cette porosité est avantageusement constituée de pores fermés dont la taille est au plus égale à 3 µm.

Dans ce qui précède et ce qui suit, on entend par « *taille* » d'un pore fermé, le diamètre équivalent de ce pore tel que déterminé à partir d'images de microscopie électronique ou optique en suivant la méthodologie décrite dans la référence **[6]** précitée.

De préférence, la poudre d'alliage est formée de particules dont les dimensions (telles que déterminées par diffraction laser) vont de 20 à 100 µm.

Conformément à l'invention, la poudre d'alliage est de préférence :
- une poudre d'un alliage binaire UMo, c'est-à-dire d'un alliage uniquement constitué d'uranium et de molybdène, auquel cas le molybdène représente préférentiellement de 5 à 15% massiques et, mieux encore, de 7 à 10% massiques de cet alliage ; ou
- une poudre d'un alliage ternaire UMoX dans lequel X représente un métal différent de l'uranium et du molybdène, propre à améliorer encore le comportement d'un combustible nucléaire sous irradiation, auquel cas le molybdène représente préférentiellement de 5 à 15% massiques et, mieux encore, de 7 à 10% massiques de cet alliage tandis que X, qui peut notamment être du titane, du zirconium, du chrome, du silicium, du niobium, du platine, de l'étain, du bismuth, du ruthénium ou du palladium, représente typiquement au plus 6% massiques de l'alliage et, mieux encore, au plus 4% massiques dudit alliage.

La poudre d'alliage selon l'invention peut notamment être préparée par un procédé qui comprend :
a) la mise en contact d'au moins un premier réactif choisi parmi les oxydes d'uranium et leurs mélanges, les fluorures d'uranium et leurs mélanges, avec un deuxième réactif consistant en du molybdène et un troisième réactif consistant en un métal réducteur, les premier, deuxième et troisième réactifs se présentant sous une forme divisée ;
b) la réaction à une température au moins égale à la température de fusion du troisième réactif et sous une atmosphère inerte, des réactifs ainsi mis en contact, moyennant quoi cette réaction conduit à la formation de l'alliage comprenant de l'uranium et du molybdène sous la forme d'une poudre dont les particules sont recouvertes d'une couche d'un oxyde ou d'un fluorure du métal réducteur ;
c) le refroidissement de la poudre ainsi formée à une vitesse au moins égale à 450°C/heure ; et
d) l'élimination de la couche d'oxyde ou de fluorure du métal réducteur qui recouvre les particules de la poudre de l'alliage comprenant de l'uranium et du molybdène.

Aussi, l'invention a-t-elle également pour objet un procédé tel que défini ci-dessus.

Dans ce procédé, le premier réactif est, de préférence, un oxyde d'uranium dans lequel le nombre d'oxydation de l'uranium va de 4 à 6, c'est-à-dire un dioxyde d'uranium (UO₂), un trioxyde d'uranium (UO₃), un sesquioxyde d'uranium (U₃O₈), un tétraoxyde d'uranium (U₄O₉) ou un mélange de ceux-ci, que l'on utilise sous la forme d'une poudre.

Il peut, toutefois, également s'agir d'un fluorure d'uranium tel qu'un tétrafluorure d'uranium ou d'un mélange de fluorures d'uranium, se présentant également sous la forme d'une poudre.

Sachant que les dimensions des particules du premier réactif ont un impact sur la granulométrie de la poudre d'alliage qui se forme à l'étape b) et que l'on préfère que les particules de cette poudre d'alliage aient des dimensions (telles que déterminées par diffraction laser) allant de 20 à 100 µm, on utilise, de préférence, une poudre d'oxyde d'uranium dont les particules ont des dimensions (telles que déterminées par diffraction laser) allant de 1 à 100 µm et, mieux encore, de 5 à 50 µm.

Pour ce faire, la poudre d'oxyde d'uranium peut être soumise, préalablement à son utilisation, à un ou plusieurs tamisages permettant d'éliminer les particules de dimensions trop faibles ou trop élevées.

Par ailleurs, la poudre d'oxyde d'uranium peut également être soumise, préalablement à son utilisation, à un traitement du type étuvage, destiné à la débarrasser des éventuelles espèces chimiques (eau, oxyhydrates, ...) susceptibles de se trouver à la surface des particules de cette poudre et/ou à un traitement thermique tel qu'un traitement à une température de 600 à 1000°C, sous une atmosphère réductrice telle qu'une atmosphère composée d'un mélange d'argon et d'hydrogène, pour ramener la teneur en oxygène de cette poudre à la stoechiométrie par rapport à l'uranium.

De manière particulièrement préférée, le premier réactif est une poudre de dioxyde d'uranium, dont la teneur en uranium 235 représente, de préférence, de 1 à 20% atomiques de la teneur totale en uranium de cette poudre, et que l'on a éventuellement préalablement traitée de manière à ce que son rapport stoechiométrique U/O soit égal à 2 ou sensiblement égal à 2.

Le deuxième réactif, à savoir le molybdène est aussi, de préférence, utilisé sous la forme d'une poudre.

Là également, dans la mesure où les dimensions des particules de cette poudre ont un impact sur la granulométrie de la poudre d'alliage qui se forme à l'étape b), la poudre de molybdène est, de préférence, formée de particules dont les dimensions (telles que déterminées par diffraction laser) sont au plus égales à 250 µm et, mieux encore, vont de 5 à 150 µm.

Quant au troisième réactif, à savoir le métal réducteur, il est avantageusement choisi parmi les métaux alcalins (lithium, sodium, potassium, rubidium, césium et francium) et les métaux alcalino-terreux (béryllium, calcium, magnésium, strontium, baryum et radium).

Plus spécifiquement, on préfère que le troisième réactif soit un métal alcalino-terreux et, notamment, du magnésium ou du calcium, que l'on utilise soit sous la forme d'une poudre soit sous la forme de copeaux ou de tournures.

Conformément à l'invention, l'étape a) peut être réalisée en procédant à un simple mélange des premier, deuxième et troisième réactifs et en introduisant ensuite ce mélange dans l'enceinte de réaction dans laquelle il est prévu d'effectuer l'étape b). Auquel cas, le mélange des trois réactifs est, de préférence, effectué dans un mélangeur à poudres du type Turbula™, permettant de mélanger de façon intime des poudres de densité et de granulométrie différentes sans induire une agglomération des particules formant ces poudres et, partant, une modification de leur granulométrie.

En variante, l'étape a) peut également être réalisée en déposant dans l'enceinte de réaction au moins une couche de pastilles constituées d'un mélange homogène des premier et deuxième réactifs (que l'on aura préalablement préparées, par exemple, en mélangeant ces deux réactifs dans un mélangeur à poudres du type Turbula™, puis en soumettant le mélange résultant à une compression uniaxiale) et au moins deux couches du troisième réactif, la couche de pastilles étant intercalée entre les deux couches du troisième réactif.

Dans tous les cas, les premier, les deuxième et troisième réactifs sont, de préférence, mis en contact dans des proportions permettant d'obtenir, à l'issue de l'étape b), une poudre d'un alliage présentant une teneur en molybdène conforme à celle désirée mais dans laquelle il n'y a plus d'uranium présent sous la forme d'oxyde ou de fluorure.

Ainsi, par exemple, dans le cas où le premier réactif est du dioxyde d'uranium tandis que le troisième réactif est du magnésium, la réaction qui se déroule à l'étape b) peut s'écrire selon le schéma simplifié suivant:

UO₂ + 2Mg + Mo → UMo + 2MgO.

Pour obtenir une poudre d'un alliage présentant une teneur massique en molybdène de 10%, on utilisera donc 1,22 g de dioxyde d'uranium et 0,12 g de molybdène et une quantité de magnésium au moins équivalente à la quantité théorique de magnésium qui est nécessaire pour réduire la totalité du dioxyde d'uranium (soit, dans le cas de la réaction mentionnée ci-dessus, 2 moles de magnésium pour 1 mole de dioxyde d'uranium).

Pour s'aménager une marge de sécurité et s'assurer d'une réduction totale du dioxyde d'uranium, il est possible d'utiliser un excès de magnésium correspondant au plus à deux fois la quantité théorique de magnésium nécessaire. Dans l'exemple précédent, la masse de magnésium susceptible d'être utilisée est alors de 0,4391 g de magnésium.

Conformément à l'invention, l'étape b) est, de préférence, réalisée dans une enceinte de réaction en molybdène pour éviter que la poudre d'alliage que l'on souhaite préparer ne soit contaminée par des éléments, notamment métalliques, provenant du matériau de cette enceinte.

Comme précédemment indiqué, l'étape b) est réalisée à une température égale ou supérieure à la température de fusion du troisième réactif, ce qui signifie que cette température sera, par exemple, au moins de 650°C si le troisième réactif est du magnésium et au moins de 842°C si le troisième réactif est du calcium.

En fait, dans le cadre de l'invention, on préfère que l'étape b) soit réalisée à une température égale ou supérieure à 900°C tout en étant inférieure à la température de fusion de l'alliage comprenant de l'uranium et du molybdène.

Typiquement, la température utilisée à l'étape b) va de 950 à 1150°C, une température idéale étant, par exemple, de 1100°C.

Par ailleurs, on préfère que cette température soit atteinte progressivement. Aussi, l'étape b) comprend-t-elle une montée en température, avantageusement de 50 à 200°C/heure.

On préfère de plus que l'étape b) soit réalisée sous une pression d'au plus 1 bar d'un gaz inerte ou d'un mélange de gaz inertes comme, par exemple, de l'argon ou un mélange d'azote et d'argon.

La durée de l'étape b) dépend de la température utilisée à cette étape et de la vitesse à laquelle cette température est atteinte. Ainsi, par exemple, à montée de température équivalente, 48 heures seront nécessaires pour une réaction effectuée à 950°C tandis que 24 heures suffiront pour une réaction effectuée à 1100°C.

Comme précédemment indiqué, l'étape c), qui est destinée à figer l'alliage en phase γ métastable, est réalisée en utilisant une vitesse de refroidissement égale ou supérieure à 450°C/heure.

Pour ce faire, l'enceinte de réaction est, de préférence, refroidie par immersion dans un fluide caloporteur, par exemple dans un bain d'eau ou dans un bain d'huile du type huile de silicone, maintenu à température ambiante ou à une température inférieure à celle-ci.

Quant à l'étape d), elle est, par exemple, réalisée par dissolution de la couche d'oxyde ou de fluorure du métal réducteur qui recouvre les particules de la poudre d'alliage (ainsi que l'excès de métal réducteur si celui-ci a été utilisé en excès), par exemple en traitant la poudre d'alliage par une phase aqueuse acide telle qu'une solution aqueuse d'acide chlorhydrique, ou par une phase organique comprenant un ou plusieurs solvants comportant des groupes hydrogénés.

Il est à noter que, pour préparer une poudre d'un alliage ternaire UMoX, voire d'un alliage composé de plus de trois métaux, par le procédé qui vient d'être décrit, il suffit d'ajouter le métal X et, le cas échéant, le ou les autres métaux supplémentaires, sous une forme divisée, aux réactifs utilisés au cours de l'étape a), cet ajout pouvant notamment se faire en utilisant ce ou ces métaux sous une forme dans laquelle il(s) est (sont) déjà allié(s) au molybdène.

Compte tenu des caractéristiques présentées par les particules de la poudre d'alliage selon l'invention, cette poudre est de nature à faciliter de façon très significative la fabrication de combustibles nucléaires, notamment en minimisant les risques de déstabilisation de l'alliage et de ségrégation lors de la fabrication de ces combustibles, et à optimiser le comportement des combustibles en situation d'irradiation, notamment en augmentant leur capacité à retenir les gaz de fission, ce qui permettra de retarder leur gonflement.

Aussi, l'invention a-t-elle encore pour objet l'utilisation d'une poudre d'un alliage comprenant de l'uranium et du molybdène en phase γ métastable telle que précédemment définie, pour la fabrication d'un combustible nucléaire et, en particulier, d'un combustible destiné à des MTR.

Typiquement, dans le cadre de cette fabrication et comme bien connu dans l'état de la technique, la poudre de l'alliage comprenant de l'uranium et du molybdène en phase γ métastable est mélangée à une poudre d'aluminium ou d'un alliage à base d'aluminium pour constituer l'âme combustible puis, ce mélange est soumis à un laminage qui permet à la fois de le mettre sous forme de plaques et de le gainer.

L'invention a, en outre, pour objet l'utilisation d'une poudre d'un alliage comprenant de l'uranium et du molybdène en phase γ métastable telle que précédemment définie, pour la fabrication de cibles destinées à la production de radioisotopes.

D'autres caractéristiques et avantages de l'invention ressortiront du complément de description qui suit, qui se rapporte à des exemples de préparation de poudres d'un alliage binaire UMo et d'un alliage ternaire UMoTi selon l'invention et qui se réfère aux figures annexées.

Il va de soi que ces exemples ne sont donnés qu'à titre d'illustrations de l'objet de l'invention et ne constituent en aucun cas une limitation de cet objet.

### BRÈVE DESCRIPTION DES DESSINS

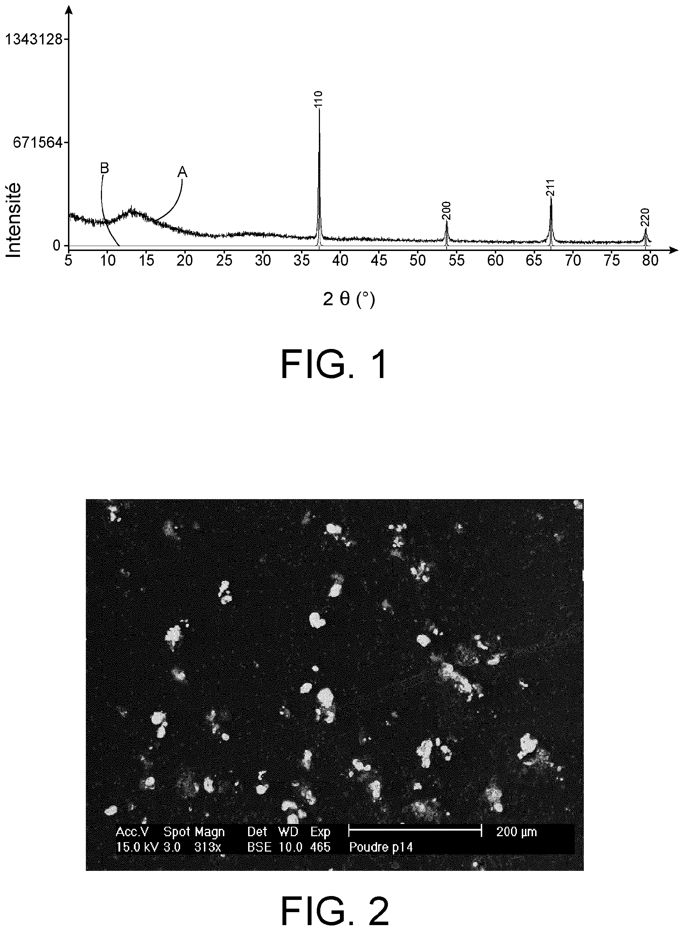

La figure 1 représente le diffractogramme de rayons X d'une poudre d'un alliage binaire UMo selon l'invention (courbe A) ainsi que celui d'une poudre d'un alliage binaire UMo en phase γ métastable de référence (fiche JCPDS - courbe B).
La figure 2 représente une image prise au microscope électronique à balayage, à un grossissement de 313, de la poudre de l'alliage binaire UMo selon l'invention dont le diffractogramme de rayons X est représenté sur la figure 1, en section polie.

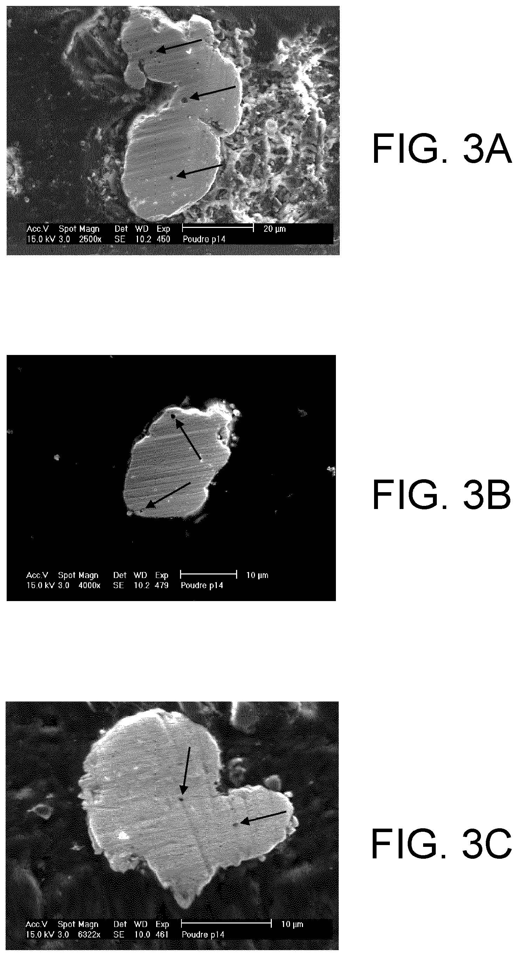

Les figures 3A, 3B et 3C représentent des images prises au microscope électronique à balayage, à des grossissements respectivement de 2500 (figure 3A), 4000 (figure 3B) et 6322 (figure 3C), de particules de la poudre de l'alliage binaire UMo montrée sur la figure 2 et sur lesquelles sont signalés par des flèches noires les pores fermés que comportent ces particules.

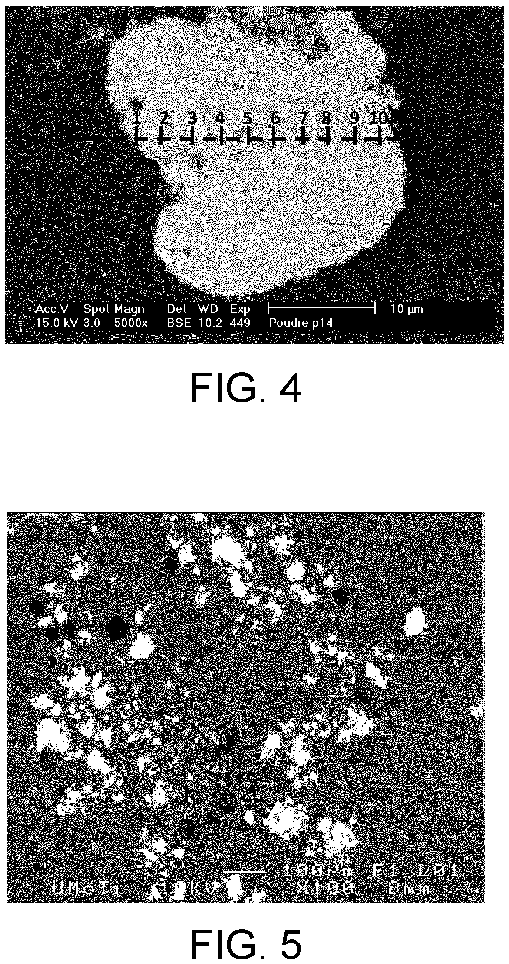

La figure 4 représente une image prise au microscope électronique à balayage, à un grossissement de 5000, d'une particule de la poudre de l'alliage binaire UMo montrée sur la figure 2 et sur laquelle sont indiqués les différents pointés (notés de 1 à 10) au niveau desquels a été réalisée une analyse par spectrométrie à dispersion d'énergie (volume élémentaire d'un pointé : 1 µm³).
La figure 5 représente une image prise au microscope électronique à balayage, à un grossissement de 100, d'une poudre d'un alliage ternaire UMoTi selon l'invention.

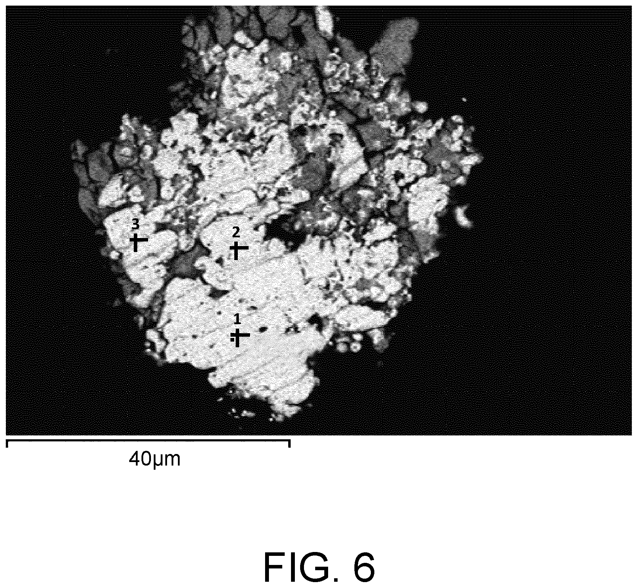

La figure 6 représente une image prise au microscope électronique à balayage, à un grossissement de 5000, d'une particule de la poudre de l'alliage ternaire UMoTi montrée sur la figure 5 et sur laquelle sont indiqués les différents pointés (notés de 1 à 3) au niveau desquels a été réalisée une analyse par spectrométrie à dispersion d'énergie (volume élémentaire d'un pointé : 1 µm³).

### EXPOSÉ DÉTAILLÉ DE MODES DE MISE EN OEUVRE PARTICULIERS

### Exemple 1 : Préparation d'une poudre d'un alliage binaire UMo selon l'invention

On prépare 100 g d'une poudre d'un alliage binaire UMo à 10% massique de molybdène de la façon suivante.

On fabrique, tout d'abord, des pastilles mesurant 12 mm de diamètre sur 2 mm d'épaisseur d'un mélange homogène U/Mo.

Pour ce faire, on mélange 102,1 g d'une poudre d'UO₂ (U/O ∼ 2), dont les particules ont des dimensions (telles que déterminées par diffraction laser) allant de 1 à 50 µm, avec 10 g d'une poudre de molybdène, dont les particules (telles que mesurées par diffraction laser) ont des dimensions allant de 1 à 150 µm, dans un mélangeur Turbula™ pendant 20 minutes et à une vitesse de 45 cycles/minute. Puis, on soumet ce mélange à une compression uniaxiale en appliquant une contrainte de 100 MPa.

Après quoi, on dépose dans un creuset en molybdène des couches de pastilles UO₂/Mo et des couches de copeaux de magnésium dont la plus grande dimension va de 1 à 3 mm, de sorte à former un empilement dans lequel chaque couche de pastilles UO₂/Mo est intercalée entre deux couches de copeaux de magnésium.

On ferme ce creuset de façon étanche sous une légère pression, inférieure à 1 bar, d'argon. Puis, on le place dans un four que l'on chauffe à la vitesse de 150°C/heure jusqu'à atteindre la température de 1100°C. On laisse ensuite le creuset dans le four à cette température de sorte que le temps de séjour du creuset dans le four soit au total de 24 heures.

A l'issue de ce traitement, on refroidit le creuset à une vitesse de 1000°C/heure en le plongeant dans un bain d'eau à température ambiante.

On récupère la poudre contenue dans le creuset et on la traite par une solution aqueuse d'acide chlorhydrique à 3,7% à hauteur de 50 mL de solution par gramme de poudre. Après décantation, on recueille la poudre par filtration, on la lave à l'eau distillée et on la sèche. On effectue cette même opération 3 fois 30 minutes.

On obtient ainsi 100 g d'une poudre d'un alliage UMo dont les particules sont totalement épurées en magnésium et en oxyde de magnésium.

Des analyses par diffractométrie de rayons X et par microscopie électronique à balayage (MEB) montrent que cette poudre se caractérise par des particules :
- dans lesquelles l'alliage est à 100% en phase cubique centrée, c'est-à-dire en phase γ métastable, avec un paramètre de 3,417 Â (cf. les diffractogrammes de rayons X illustrés sur la figure 1) ;
- dont les dimensions sont comprises entre 20 et 100 µm (cf. figures 2, 3A, 3B et 3C) ;
- qui présentent un indice ou paramètre d'élongation (tel que déterminé à partir d'images MEB, telles que celles montrées sur les figures 2, 3A, 3B et 3C, par la méthodologie décrite dans la référence **[6]** précitée) qui est compris entre 1,1 et 2 ;
- qui présentent des pores fermés dont la taille (c'est-à-dire le diamètre équivalent tel que déterminé à partir d'images MEB, telles que celles montrées sur les figures 3A, 3B et 3C, par la méthodologie décrite dans la référence **[6]** précitée) ne dépasse pas 3 µm ; et
- dont la porosité fermée (telle que déterminée à partir d'images MEB, telles que celles montrées sur les figures 3A, 3B et 3C, conformément à la norme ASTM E1245-03) ne représente pas plus de 5% du volume total de ces particules.

Par ailleurs, une analyse d'une particule par MEB couplée à une analyse par spectrométrie à dispersion d'énergie (EDS) donne, pour les 10 pointés (notés de 1 à 10 - volume élémentaire d'un pointé : 1 µm³) montrés sur la figure 4, les teneurs massiques en uranium et en molybdène qui sont présentées dans le tableau I ci-après.

**Tableau I**

| **Pointés** | **U (% massique)** | **Mo (% massique)** |
|---|---|---|
| 1 | 86,84 | 13,16 |
| 2 | 86,77 | 13,23 |
| 3 | 86,63 | 13,37 |
| 4 | 87,91 | 12,09 |
| 5 | 87,08 | 12,92 |
| 6 | 86,72 | 13,28 |
| 7 | 86,57 | 13,43 |
| 8 | 87,56 | 12,44 |
| 9 | 87,32 | 12,68 |
| 10 | 86,38 | 13,62 |
| **Moyenne** ± **écart-type** | 86,98 ± 0,48 | 13,02 ± 0,48 |

Comme le montre ce tableau, la variation de la teneur en molybdène est inférieure à 1% massique.

### Exemple 2 : Préparation d'une poudre d'un alliage ternaire UMoTi selon l'invention

On prépare 100 g d'une poudre d'un alliage ternaire UMoTi à 9% massique de molybdène et à 1% massique de titane en suivant le même protocole opératoire que celui décrit dans l'exemple 1 ci-avant, à ceci près que l'on utilise 9 g de molybdène et 1 g de titane, la quantité de magnésium utilisée étant comme précédemment d'environ 37 g.

La figure 5 montre une image prise au microscope électronique à balayage de la poudre de l'alliage UMoTi ainsi obtenue.

Une analyse d'une particule de cette poudre par MEB couplée à une analyse par EDS donne, pour les 3 pointés (notés de 1 à 3 - volume élémentaire d'un pointé : 1 µm³) montrés sur la figure 6, les teneurs massiques en uranium, en molybdène et en titane qui sont présentées dans le tableau II ci-après.

**Tableau II**

| **Pointés** | **U (% massique)** | **Mo (% massique)** | **Ti (% massique)** |
|---|---|---|---|
| 1 | 92,4 | 6,24 | 1,72 |
| 2 | 91,95 | 6,10 | 1,95 |
| 3 | 92,16 | 6,07 | 1,77 |
| **Moyenne ± écart-type** | 92,05 ± 0, 09 | 6,14 ± 0,07 | 1,81 ± 0,10 |

Ce tableau montre que, non seulement la répartition du molybdène est très homogène mais que celle du titane l'est également.

### REFERENCES CITEES

**[1]** FR 2 777 688
**[2]** US 5,978,432
**[3]** JP 55-054508
**[4]** J.S. Lee et al., Journal of Nuclear Materials, 306, 147-152, 2002
**[5]** J.M. Park et al., Journal of Nuclear Materials, 397, 27-30, 2010
**[6]** C. Souchier, « Analyse d'images », in Techniques de l'Ingénieur, Traité Analyse Chimique et Caractérisation, P855, 1-18, 1998
**[7]** GB n° 2 354 256

## Revendications

1. Poudre d'un alliage comprenant de l'uranium et du molybdène en phase γ métastable, qui est formée de particules qui présentent un indice d'élongation au moins égal à 1,1, une valeur de porosité fermée non nulle, et qui sont composées de grains ayant une teneur en molybdène dont les variations au sein d'un même grain sont au plus de 1% massique.

2. Poudre selon la revendication 1, dans laquelle l'indice d'élongation des particules est au plus égal à 2.

3. Poudre selon la revendication 1 ou la revendication 2, dans laquelle la valeur de la porosité fermée des particules est au plus égale à 5% (v/v).

4. Poudre selon l'une quelconque des revendications précédentes, dans laquelle la porosité fermée des particules est constituée de pores fermés dont la taille est au plus égale à 3 µm.

5. Poudre selon l'une quelconque des revendications précédentes, dans laquelle les particules ont des dimensions allant de 20 à 100 µm.

6. Poudre selon l'une quelconque des revendications précédentes, qui est une poudre d'un alliage binaire d'uranium et de molybdène, cet alliage comprenant de préférence une teneur massique en molybdène de 5 à 15 %.

7. Poudre selon l'une quelconque des revendications 1 à 5, qui est une poudre d'un alliage ternaire UMoX où X représente un métal autre que l'uranium et le molybdène, le métal X étant de préférence choisi parmi le titane, le zirconium, le chrome, le silicium, le niobium, le platine, l'étain, le bismuth, le ruthénium et le palladium.

8. Poudre selon la revendication 7, dans laquelle la teneur massique en molybdène va de 5 à 15 %, de préférence de 7 à 10%, tandis que la teneur massique en métal X est au plus de 6 %, de préférence au plus de 4%.

9. Procédé de préparation d'une poudre d'un alliage comprenant de l'uranium et du molybdène en phase γ métastable tel que définie dans l'une quelconque des revendications 1 à 8, qui comprend :
a) la mise en contact d'au moins un premier réactif choisi parmi les oxydes d'uranium et leurs mélanges, les fluorures d'uranium et leurs mélanges, avec un deuxième réactif consistant en du molybdène et un troisième réactif consistant en un métal réducteur, les premier, deuxième et troisième réactifs se présentant sous une forme divisée ;
b) la réaction à une température au moins égale à la température de fusion du troisième réactif et sous une atmosphère inerte, des réactifs ainsi mis en contact, moyennant quoi cette réaction conduit à la formation de l'alliage comprenant de l'uranium et du molybdène sous la forme d'une poudre dont les particules sont recouvertes d'une couche d'un oxyde ou d'un fluorure du métal réducteur ;
c) le refroidissement de la poudre ainsi formée à une vitesse au moins égale à 450°C/heure ; et
d) l'élimination de la couche d'oxyde ou de fluorure du métal réducteur qui recouvre les particules de la poudre de l'alliage comprenant de l'uranium et du molybdène.

10. Procédé selon la revendication 9, dans lequel le premier réactif est une poudre d'oxyde d'uranium choisi parmi le dioxyde d'uranium, le trioxyde d'uranium, le sesquioxyde d'uranium, le tétraoxyde d'uranium et leurs mélanges.

11. Procédé selon la revendication 10, dans lequel la poudre d'oxyde d'uranium est formée de particules dont les dimensions vont de 1 à 100 µm, de préférence de 5 à 50 µm.

12. Procédé selon la revendication 10 ou la revendication 11, dans lequel la poudre d'oxyde d'uranium est une poudre de dioxyde d'uranium qui présente un rapport stoechiométrique U/O égal à 2 ou sensiblement égal à 2.

13. Procédé selon l'une quelconque des revendications 9 à 12, dans lequel le deuxième réactif se présente sous la forme d'une poudre dont les particules ont des dimensions sont inférieures à 250 µm, de préférence de 5 à 150 µm.

14. Procédé selon l'une quelconque des revendications 9 à 13, dans lequel le troisième réactif est choisi parmi les métaux alcalins et les métaux alcalino-terreux.

15. Procédé selon la revendication 14, dans lequel le troisième réactif est un métal alcalino-terreux que l'on utilise sous la forme d'une poudre, de copeaux ou de tournures.

16. Procédé selon l'une quelconque des revendications 9 à 15, dans lequel l'étape a) est réalisée en déposant dans une enceinte de réaction au moins une couche de pastilles constituées d'un mélange homogène des premier et deuxième réactifs et au moins deux couches du troisième réactif, la couche de pastilles étant intercalée entre les deux couches du troisième réactif.

17. Procédé selon l'une quelconque des revendications 9 à 16, dans lequel l'étape b) est réalisée à une température égale ou supérieure à 900°C mais inférieure à la température de fusion de l'alliage comprenant de l'uranium et du molybdène.

18. Procédé selon l'une quelconque des revendications 9 à 17, dans lequel l'étape d) est réalisée par dissolution de la couche d'oxyde ou de fluorure du métal réducteur.

19. Utilisation d'une poudre d'un alliage comprenant de l'uranium et du molybdène en phase γ métastable telle que définie dans l'une quelconque des revendications 1 à 8, pour la fabrication d'un combustible nucléaire, notamment pour réacteurs nucléaires expérimentaux, ou pour la fabrication de cibles destinées à la production de radioisotopes.

## Patentansprüche

1. Pulver einer Legierung, aufweisend Uran und Molybdän in metastabiler γ-Phase, das aus Partikeln gebildet ist, die einen Elongationsindex von mindestens 1,1 und einen Wert der geschlossenen Porosität ungleich Null aufweisen und die aus Körnern aufgebaut sind, welche einen Molybdänanteil aufweisen, dessen Schwankung innerhalb eines selben Korns höchstens 1 Massen-% beträgt.

2. Pulver nach Anspruch 1, wobei der Elongationsindex der Partikel höchstens 2 beträgt.

3. Pulver nach Anspruch 1 oder Anspruch 2, wobei der Wert der geschlossenen Porosität der Partikel höchstens 5 % (v/v) beträgt.

4. Pulver nach einem der vorhergehenden Ansprüche, wobei die geschlossene Porosität der Partikel durch geschlossene Poren dargestellt wird, deren Größe höchstens 3 µm beträgt.

5. Pulver nach einem der vorhergehenden Ansprüche, wobei die Partikel Abmessungen im Bereich von 20 bis 100 µm haben.

6. Pulver nach einem der vorhergehenden Ansprüche, bei dem es sich um ein Pulver aus einer binären Legierung aus Uran und Molybdän handelt, wobei diese Legierung vorzugsweise einen Massenanteil von Molybdän von 5 bis 15 % aufweist.

7. Pulver nach einem der Ansprüche 1 bis 5, bei dem es sich um ein Pulver aus einer ternären Legierung, UMoX, handelt, wobei X ein Metall abgesehen von Uran und Molybdän repräsentiert, wobei das Metall X vorzugsweise gewählt ist aus Titan, Zirkonium, Chrom, Silicium, Niob, Platin, Zinn, Bismut, Ruthenium und Palladium.

8. Pulver nach Anspruch 7, wobei der Massenanteil von Molybdän im Bereich von 5 bis 15 %, vorzugsweise von 7 bis 10 %, liegt, hingegen der Massenanteil des Metalls X höchstens 6 %, und vorzugsweise höchstens 4 % beträgt.

9. Verfahren zur Herstellung eines Pulvers aus einer Legierung, die Uran und Molybdän in metastabiler γ-Phase aufweist, wie definiert in einem der Ansprüche 1 bis 8, das umfasst:
a) In-Kontakt-Bringen mindestens eines ersten Reaktionspartners, der aus den Uranoxiden und Gemischen von diesen, Uranfluoriden und Gemischen von diesen, gewählt ist, mit einem zweiten Reaktionspartner, der aus Molybdän besteht, und eines dritten Reaktionspartners, der aus einem reduzierenden Metall besteht, wobei der erste, der zweite und der dritte Reaktionspartner in aufgeteilter Form vorliegen;
b) Reagieren, und zwar bei einer Temperatur, die mindestens so hoch wie die Schmelztemperatur des dritten Reaktionspartners ist und unter inerter Atmosphäre, der auf diese Weise in Kontakt gebrachten Reaktionspartner, wodurch dieses Reagieren zur Bildung der Legierung führt, die Uran und Molybdän in Form eines Pulvers aufweist, dessen Partikel mit einer Oxidschicht oder einer Schicht aus einem Fluorid des reduzierenden Metalls überzogen sind;
c) Abkühlen des auf diese Weise gebildeten Pulvers mit einer Geschwindigkeit von mindestens 450 °C/ Stunde; und
d) Entfernen der Oxidschicht oder der aus einem Fluorid des reduzierenden Metalls bestehenden Schicht, welche die Pulverpartikel der Uran und Molybdän enthaltenden Legierung überzieht.

10. Verfahren nach Anspruch 9, wobei der erste Reaktionspartner ein Uranoxidpulver ist, das gewählt ist aus: Urandioxid, Urantrioxid, Uransesquioxid, Urantetraoxid, und Gemischen von diesen.

11. Verfahren nach Anspruch 10, wobei das Uranoxidpulver aus Partikeln gebildet ist, deren Abmessungen im Bereich von 1 bis 100 µm, vorzugsweise 5 bis 50 µm, liegen.

12. Verfahren nach Anspruch 10 oder Anspruch 11, wobei das Uranoxidpulver ein Urandioxidpulver ist, das ein stöchiometrisches Verhältnis U/O von 2 oder im Wesentlichen 2 aufweist.

13. Verfahren nach einem der Ansprüche 9 bis 12, wobei der zweite Reaktionspartner in Form eines Pulvers vorliegt, dessen Partikel Abmessungen von weniger als 250 µm, vorzugsweise von 5 bis 150 µm, aufweisen.

14. Verfahren nach einem der Ansprüche 9 bis 13, wobei der dritte Reaktionspartner gewählt ist aus Alkalimetallen und Erdalkalimetallen.

15. Verfahren nach Anspruch 14, wobei der dritte Reaktionspartner ein Erdalkalimetall ist, das in Form von Pulver, Hobelspänen oder Drehspänen verwendet wird.

16. Verfahren nach einem der Ansprüche 9 bis 15, wobei der Schritt a) dadurch realisiert wird, dass in ein Reaktionsgefäß mindestens eine Schicht von Pellets, die aus einer homogenen Mischung des ersten und des zweiten Reaktionspartners besteht, und mindestens zwei Schichten des dritten Reaktionspartners eingebracht werden, wobei die Pelletschicht zwischen zwei Schichten des dritten Reaktionspartners eingelegt wird.

17. Verfahren nach einem der Ansprüche 9 bis 16, wobei der Schritt b) bei einer Temperatur von größer oder gleich 900 °C, jedoch unterhalb der Schmelztemperatur der Uran und Molybdän enthaltenden Legierung durchgeführt wird.

18. Verfahren nach einem der Ansprüche 9 bis 17, wobei der Schritt d) durch Auflösen der Oxidschicht oder der aus einem Fluorid des reduzierenden Metalls bestehenden Schicht durchgeführt wird.

19. Verwendung eines Pulvers aus einer Legierung, die Uran und Molybdän in metastabiler γ-Phase aufweist, wie definiert in einem der Ansprüche 1 bis 8, zur Herstellung eines Kernbrennstoffs, insbesondere für Experimentalkernreaktoren, oder zur Herstellung von Targets, die zur Produktion von Radioisotopen bestimmt sind.

## Claims

1. Powder of an alloy comprising uranium and molybdenum in a metastable γ phase, which is formed of particles which have an elongation index of at least equal to 1.1, a non-zero closed porosity value, and which are composed of grains having a molybdenum content, the variations of which within a same grain are of at most 1% by mass.

2. Powder according to claim 1, wherein the elongation index of the particles is at most equal to 2.

3. Powder according to claim 1 or claim 2, wherein the value of the closed porosity of the particles is at most equal to 5% (v/v).

4. Powder according to any of the preceding claims, wherein the closed porosity of the particles consists of closed pores, the size of which is at most equal to 3 µm.

5. Powder according to any of the preceding claims, wherein the particles have dimensions ranging from 20 to 100 µm.

6. Powder according to any of the preceding claims, which is a powder of a binary alloy of uranium and molybdenum, this alloy preferably comprising a molybdenum mass content from 5 to 15%.

7. Powder according to any of claims 1 to 5, which is a powder of a ternary UMoX alloy wherein X represents a metal other than uranium and molybdenum, X being preferably selected from titanium, zirconium, chromium, silicon, niobium, platinum, tin, bismuth, ruthenium and palladium.

8. Powder according to claim 7, wherein the molybdenum mass content ranges from 5 to 15%, preferably from 7 to 10%, while the X metal mass content is at most 6%, preferably at most 4%.

9. Method for preparing a powder of an alloy comprising uranium and molybdenum in a metastable γ phase as defined in any of claims 1 to 8, which comprises:
a) putting at least one first reagent selected from uranium oxides and mixtures thereof, uranium fluorides and mixtures thereof, into contact with a second reagent consisting in molybdenum and a third reagent consisting in a reducing metal, the first, second and third reagents being in a divided form;
b) reacting the so contacted reagents at a temperature at least equal to the melting temperature of the third reagent and under an inert atmosphere, whereby this reaction leads to the formation of the alloy comprising uranium and molybdenum in the form of a powder, the particles of which are covered with a layer of an oxide or fluoride of the reducing metal;
c) cooling the so formed powder at a rate at least equal to 450°C/hour; and
d) removing the layer of oxide or fluoride of the reducing metal which covers the particles of the alloy comprising uranium and molybdenum.

10. Method according to claim 9, wherein the first reagent is a powder of uranium oxide selected from uranium dioxide, uranium trioxide, uranium sesquioxide, uranium tetraoxide and mixtures thereof.

11. Method according to claim 10, wherein the uranium oxide powder is formed of particles, the dimensions of which range from 1 to 100 µm, preferably from 5 to 50 µm.

12. Method according to claim 10 or claim 11, wherein the uranium oxide powder is a uranium dioxide powder which has a stoichiometric ratio U/O equal to 2 or substantially equal to 2.

13. Method according to any of claims 9 to 12, wherein the second reagent is in the form of a powder, the particles of which have dimensions of less than 250 µm, preferably from 5 to 150 µm.

14. Method according to any of claims 9 to 13, wherein the third reagent is selected from alkaline metals and earth alkaline metals.

15. Method according to claim 14, wherein the third reagent is an earth alkaline metal which is used in the form of a powder, shavings or turnings.

16. Method according to any of claims 9 to 15, wherein step a) is carried out by depositing in a reaction enclosure at least one layer of pellets consisting of a homogeneous mixture of the first and second reagents and at least two layers of the third reagent, the layer of pellets being inserted between both layers of the third reagent.

17. Method according to any of claims 9 to 16, wherein step b) is carried out at a temperature equal to or greater than 900°C but less than the melting temperature of the alloy comprising uranium and molybdenum.

18. Method according to any of claims 9 to 17, wherein step d) is carried out by dissolving the layer of oxide or fluoride of the reducing metal.

19. Use of a powder of an alloy comprising uranium and molybdenum in a metastable γ phase as defined in any of claims 1 to 8, for manufacturing a nuclear fuel, notably for experimental nuclear reactors, or for manufacturing targets intended for producing radioisotopes.
